# EUROPÄISCHE PATENTSCHRIFT

(11) **EP 0 392 257 B1**
(45) Veröffentlichungstag und Bekanntmachung des Hinweises auf die Patenterteilung: **14.12.1994**
(21) Anmeldenummer: 90105862.8
(22) Anmeldetag: 28.03.1990
(51) Int. Cl.: A01C 17/00

(54) **Verfahren zum Ausbringen von Dünger mit einem Schleuderdüngerstreuer**
Method to distribute fertilizer with a centifugal broadcaster
Méthode de distribution d'engrais avec un épandeur centrifuge

(30) Priorität: 08.04.1989 DE 3911584
(43) Veröffentlichungstag der Anmeldung: 17.10.1990
(73) Patentinhaber: Amazonen-Werke H. Dreyer GmbH & Co. KG, D-49205 Hasbergen (DE)
(72) Erfinder: Dreyer, Heinz, Dipl.-Ing. Dr., D-4507 Hasbergen (DE)

(56) Entgegenhaltungen:
- EP-A- 0 298 549
- DE-A- 3 337 762
- FR-A- 1 532 897
- FR-A- 2 410 427

## Beschreibung

Die Erfindung betrifft ein verfahren zum Ausbringen von Dünger mit einem Schleuderdüngerstreuer gemäß Oberbegriff des Patentanspruches 1.

Derartige Verfahren sind bekannt. Die Schleuderdüngerstreuer zur Durchführung des Verfahrens weisen ein oder mehrere Vorratsbehälter auf, unter denen ein oder mehrere Schleuderscheiben angeordnet sind. Bei dem Schleuderdüngerstreuer gemäß der DE-OS 15 82 091 sind zwei Schleuderscheiben vorgesehen, wobei jeder Schleuderscheibe zwei Auslauföffnungen zugeordnet sind, durch welche der Dünger den Schleuderscheiben auf vorbestimmten Aufgabepunkten zugeführt wird. Die Lage dieser beiden Auslauföffnungen kann gemeinsam gegenüber der Schleuderscheibe über einen Hebelmechanismus verstellt werden, so daß die Lage der Aufgabepunkte des Düngers auf den Schleuderscheiben veränderbar und das Streubild einzustellen ist, und eine genaue Symmetrie des Streubildes sowie ein gleichmäßiges Streubild erhalten wird.

Die Praxis hat nun gezeigt, daß es Probleme beim Ausbringen von kleinsten Düngermengen gibt, weil die Düngerkörner teilweise eine Größe aufweisen, die größer ist als der eingestellte kleine Querschnitt der Auslauföffnung, der die Ausbringmenge pro Flächeneinheit bestimmt. Des weiteren kommt es häufig vor, daß der Dünger zu Klumpen zusammenbackt, welche insbesondere beim Ausbringen von kleinen Ausbringmengen die Auslauföffnungen verstopfen können.

Die Ursache hierfür liegt insbesondere darin, daß bei kleinen Mengen der Gesamtquerschnitt, der die Ausbringmenge bestimmt, auf zwei oder mehr Dosieröffnungen aufzuteilen ist, so daß jede Öffnung dann nur noch einen sehr kleinen Querschnitt bei dem Ausbringen kleinster und kleiner Ausbringmengen besitzt. An sich ist es vorteilhaft, unter bestimmten Voraussetzungen den Dünger auf zwei oder mehr Stellen (Aufgabepunkte) auf jede Streuscheibe aufzugeben, um so ein sehr gleichmäßiges Streubild zu erhalten. Dieser Vorteil wirkt sich, wie vor geschildert, jedoch bei dem Ausbringen kleinster Ausbringmengen nachteilig aus.

Die gleiche Problematik ergibt sich beim Einsatz eines Vierscheibendüngerstreuers, wie er beispielsweise durch die DE-OS 33 37 762 bekannt ist. Beim Ausbringen großer und normaler Streumengen können die Dosieröffnungen eine ausreichende Größe aufweisen, so daß Düngerkörner oder zu Klumpen zusammengebackter Dünger die Dosieröffnung nicht verstopfen kann. Bei kleinen Ausbringmengen pro Flächeneinheit werden jedoch die einzustellenden Querschnitte der Dosieröffnungen, die die Ausbringmengen bestimmen, sehr klein, so daß sich wieder die eingangs genannten Probleme ergeben.

Die europäische Patentanmeldung 02 98 549 zeigt einen Schleuderdüngerstreuer mit einer Sensorüberwachungseinrichtung, mittels welcher sichergestellt werden soll, daß der Dünger gleichmäßig verteilt wird. Wenn über diese Sensoreinrichtung festgestellt wird, daß keine gleichmäßige Düngerverteilung aufgrund der Abwurfbahnen und der Lage dieser Abwurfbahn im Wurfsektor erfolgt, setzt eine entsprechende Regelung ein, mittels welcher über Stellelemente die Schieber verstellt werden, so daß die Öffnungsweite der Auslauföffnung einstellbar ist.

Der Erfindung liegt nun die Aufgabe zugrunde, Maßnahmen für ein Verfahren vorzuschlagen, so daß auch kleine Düngermengen pro Flächeneinheit sicher und gleichmäßig ausgebracht werden können.

Erfindungsgemäß wird diese Aufgabe durch die Maßnahmen gemäß des Kennzeichnes des Patentanspruches 1 gelöst.

Infolge dieser Maßnahme wird bei Bedarf - wenn kleine Ausbringmengen pro Flächeneinheit ausgebracht werden sollen - d.h. wenn der Öffnungsquerschnitt der Auslauföffnungen sehr klein sein muß, eine oder mehrere der Dosieröffnungen geschlossen, so daß die Öffnung der weiterhin zur Dosierung benutzten Dosieröffnungen größer eingestellt werden, so daß eine sichere und genaue Dosierung dieser kleinsten Ausbringmengen auch bei grobkörnigen und klumpigen Düngern gewährleistet ist. Insbesondere wird bei Verwendung von Dosieröffnungen zum Dosieren des Düngers sichergestellt, daß diese kleinen Dosieröffnungen bei kleinsten Ausbringmengen nicht durch grobe große Körner oder zu Klumpen zusammengebackene Düngerteile verstopft werden. Gleichzeitig gehen mit dem Schließen einiger Dosieröffnungen entsprechende Streubildkorrekturmaßnahmen einher, um wieder ein gleichmäßiges Streubild über die gesamte Streubreite zu erreichen. Diese Streubildkorrekturmaßnahmen können beispielsweise darin bestehen, daß entsprechend ausgestattete Schleuderscheiben mit längeren oder kürzeren Wurfschaufeln sowie anders im Winkel angestellte Wurfschaufeln eingesetzt werden oder aber die verstellbar auf den Schleuderscheiben angeordneten Wurfschaufeln entsprechend im Winkel verstellt werden, d.h. sie werden in Drehrichtung der Scheiben vor oder zurück verschwenkt. Es wird wieder insgesamt ein gleichmäßiges Streubild, d.h. eine gleichmäßige Streuverteilung über die gesamte Streubreite erhalten. Auch kann diese Streubildkorrekturmaßnahme in einer Verschiebung der Dosieröffnungen und/oder der Verlagerung des Aufgabepunktes der Düngemittel auf der Schleuderscheibe durch entsprechende Leitelemente gegenüber den Schleuderscheiben erreicht werden. Diese Angaben werden dem Landwirt vom Hersteller in Tabellen angegeben, so daß die Einstellung der Maschine in einfacher Weise anhand von Tabellen ohne Durchführung von umfangreichen Streuversuchen möglich ist.

In Ausführungsform kann der Schleuderdüngerstreuer mit zwei Dosieröffnungen pro Schleuderscheibe ausgerüstet sein, so daß die Auslauföffnungen normal großen Ausbringmengen, wobei der geöffnete Querschnitt, durch den die Düngemittel auf die Schleuderscheiben fließen, ein Mehrfaches des normalen Korngrößendurchmessers aufweisen. Wenn kleinere Düngermengen pro Flächeneinheit ausgebracht werden, werden ein oder mehrere Dosieröffnungen geschlossen, so daß bei kleinsten Mengen die noch verbleibende Dosieröffnung wesentlich weiter geöffnet wird, als wenn der Dünger durch alle vorgesehenen Dosieröffnungen der Schleuderscheibe zugeführt wird. Ein Verstopfen dieser noch geöffneten Dosieröffnungen ist somit auch bei kleinsten Mengen praktisch ausgeschlossen.

Hierbei kann vorgesehen sein, wenn der Schleuderdüngerstreuer zwei Schleuderscheiben aufweist, daß beim Ausbringen von kleinen und kleinsten Düngermengen pro Flächeneinheit eine der Dosieröffnungen geschlossen wird, so daß ausschließlich über eine Dosieröffnung der Schleuderscheibe das auszubringende Material bei kleinen Mengen zudosiert wird.

Es ist auch möglich, beim Ausbringen von kleinsten Düngermengen die aktive Dosieröffnung, über welche der auszubringende Dünger der Schleuderscheibe zugeführt wird, pro aktive Dosieröffnung bei kleinen und kleinsten Düngermengen zu vergrößern, indem die Düngerzuführung zu einer oder mehreren Schleuderscheiben abgeschaltet wird. Die Ausbringmenge, die über die Dosieröffnung von dem Schleuderdüngerstreuer verteilt wird, wird also vergrößert, da die weiteren vorhandenen Schleuderscheiben des Schleuderdüngerstreuer inaktiv bleiben.

Bei einem Schleuderdüngerstreuer gemäß des Patentanspruches 2, welcher vier Schleuderscheiben aufweist, wird die erfindungsgemäße Aufgabe durch die Maßnahmen des Kennzeichens des Patentanspruches 2 gelöst. Es werden die vorgeschilderten Vorteile auch bei diesem Schleuderdüngerstreuer beim Ausbringen kleinster Mengen erreicht.

Mögliche Maßnahmen zur Streubildkorrektur müssen, wenn einige Dosieröffnungen geschlossen oder einige Dosierorgane abgeschaltet werden, beim Ausbringen von kleinen oder kleinsten Düngermengen vorgenommen werden, um wieder ein gleichmäßiges Streubild zu erhalten. Bei einem Schleuderdüngerstreuer der eine große quer zur Fahrtrichtung aufweisende Breite mit einem länglichen sich quer zur Fahrtrichtung erstreckenden Behälterboden aufweist, bei dem die Dosieröffnungen im Außenbereich des Behälters angeordnet sind, kann vorgesehen sein, daß innerhalb des Vorratsbehälters eine Rühr- und/oder Förderwelle angeordnet ist, welche den Dünger aus der Behältermitte zu den äußeren Dosieröffnungen fördert. Hierbei wird eine gute Behälterentleerung erreicht. Die in Behälter verbleibenden Restmengen werden sehr klein gehalten.

Weitere Einzelheiten der Erfindung sind der Beispielsbeschreibung und den Zeichnungen zu entnehmen. Hierbei zeigen
- Fig. 1: der in erfindungsgemäßer Weise ausgerüstete Schleuderdüngerstreuer in der Ansicht von hinten,

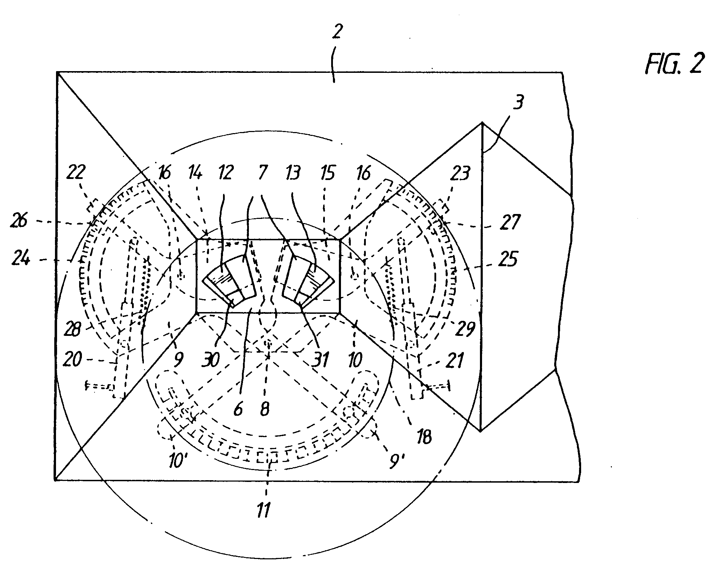

- Fig. 2: Teildraufsicht des in erfindungsgemäßer Weise ausgerüsteten Schleuderdüngerstreuers gemäß Fig. 1,
- Fig. 3: ein Schleuderscheibenpaar mit winkelverschwenkbaren und in verschiedenen Stellungen feststellbaren Wurfschaufeln in der Draufsicht und in vergrößertem Maßstab
- Fig. 4: ein mehrere Trichterspitzen aufweisender Schleuderdüngerstreuer, wobei unter jeder Trichterspitze eine Schleuderscheibe angeordnet ist in der Ansicht von hinten.
- Fig. 5: einen weiteren in erfindungsgemäßer Weise ausgerüsteten Schleuderdüngerstreuer in der Ansicht von hinten und
- Fig. 6: eine weitere Möglichkeit zur Streubildkorrektur, indem die Schleuderscheibe gegenüber den Dosieröffnungen verstellt werden.

Der Schleuderdüngerstreuer weist den Rahmen 1 auf, an dem der Vorratsbehälter 2 befestigt ist. Der Vorratsbehälter 2 ist durch das dachförmige Mittelteil 3 derart unterteilt, daß die beiden trichterförmigen Behälterteile 4 entstehen. Im jeweiligen unteren Bereich 5 dieser trichterförmigen Behälterteile 4 ist die Bodenplatte 6 am Trichter befestigt. In diesen Bodenplatten 6 sind jeweils die beiden Auslauföffnungen 7 angeordnet. Unterhalb dieser Bodenplatten 6 befinden sich jeweils die um die aufrechte Achse 8 verschwenkbaren plattenförmigen Elemente 9 und 10. Diese plattenförmigen Elemente 9 und 10 wirken mit der Einstellskala 11 zusammen, so daß sie unabhängig voneinander verstell- und festsetzbar sind. In diesen plattenförmigen Elementen 9 und 10 befinden sich die Dosieröffnungen 12 und 13. Unterhalb dieser Dosieröffnungen 12 und 13 sind die diese Dosieröffnungen 12 und 13 in ihrer Öffnungsweite bestimmenden sowie diese verschließenden Schieber 14 und 15 angeordnet. Diese Schieber 14 und 15 sind jeweils schwenkbar um den Bolzen 16 an den plattenförmigen Elementen 9 und 10 angelenkt.

Die sich im inneren des Vorratsbehälters 2 befindlichen Düngemittelpartikel gelangen jeweils in einstellbaren Mengen über die Dosieröffnungen 12 und 13 zu den unter diesen Auslauföffnungen 12 und 13 drehbar in den Getrieben 17 gelagerten Schleuderscheiben 18. Diese rotierend antreibbaren Schleuderscheiben 18 verteilen die ihnen zudosierten Düngemittelpartikel mittels der auf den Schleuderscheiben 18 angeordneten Wurfschaufeln 19 in exakter Weise über die zu bestreuende Bodenoberfläche. Der Antrieb der Schleuderscheiben 18 erfolgt in bekannter und daher nicht näher dargestellter Weise, beispielsweise mittels einer Gelenkwelle von der Zapfwelle des den Schleuderdüngerstreuer transportierenden Ackerschleppers und über Getriebeanordnungen. Auch können die Schleuderscheiben 18 von Ölmotoren angetrieben werden.

Die die Schieber 14 und 15 betätigenden Betätigungselemente 20 und 21 sind zwischen den Schiebern 14 und 15 und den die Dosieröffnungen 12 und 13 aufweisenden plattenförmigen Elementen 9 und 10 angeordnet. Hierbei wirken die den Schiebern 14 und 15 zugehörigen Einstellhebel 22 und 23 mit der an dem jeweiligen plattenförmigen Element 9 bzw. 10 angeordneten Einstellskala 24 bzw. 25 Zusammen. Auf diesen Skalen 24 und 25 sind die in unterschiedlichen Positionen einstellbaren Anschläge 26 und 27 befestigt, an denen die Einstellhebel 22 und 23 der Schieber 14 und 15 zur Anlage kommen. Zwischen den plattenförmigen Elementen 9 und 10 und den Schiebern 14 und 15 ist weiterhin jeweils die Zugfeder 28 bzw. 29 angeordnet. Mittels dieser Zugfeder 28 bzw. 29 werden die Dosierschieber 14 bzw. 15 bis gegen die Anschläge 26 bzw. 27 gezogen, wenn die als Hydraulikzylinder ausgebildeten Betätigungselemente 20 und 21 drucklos geschaltet sind. Werden nun diese als Hydraulikzylinder ausgebildeten Betätigungselemente 20 bzw. 21 mit Hydrauliköl beaufschlagt, wird die Düngemittelzufuhr zu den Schleuderscheiben 18 unterbrochen, indem die Schieber 14 bzw. 15 die Auslauföffnungen 12 und 13 verschließen.

Die Lage der in den plattenförmigen Elementen 9 und 10 angeordneten Dosieröffnungen 12 und 13 läßt sich im Verstellbereich der beiden größeren, in der Bodenplatte 6 sich befindlichen Zulauföffnungen 7 verstellen, so daß die Lage und Zuordnung der beiden, einer Schleuderscheibe 18 zugeordneten Düngeraufgabepunkte zueinander veränderbar und unabhängig voneinander einstellbar ist. Die jeweilige Lage der Dosieröffnungen 12 bzw. 13 gegenüber den Schleuderscheiben 18 läßt sich mittels den mit der Einstellskala 11 zusammenwirkenden Positionshebeln 9' bzw. 10' der plattenförmigen Elemente 9 bzw. 10 in exakter Weise vornehmen, so daß sich die Lage des jeweiligen Aufgabepunktes der Düngemittelpartikel auf der Schleuderscheibe 18 individuell einstellen läßt. Hierbei befindet sich der jeweilige Aufgabepunkt in etwa senkrecht unterhalb des jeweils freigegebenen Öffnungsquerschnittes 30 bzw. 31 der Dosieröffnungen 12 bzw. 13. Durch Verschwenken der mit den Dosieröffnungen 12 bzw. 13 versehenen plattenförmigen Elemente 9 bzw. 10 jeweils um die aufrechte Achse 8, läßt sich die Lage der jeweiligen Dosieröffnung 12 bzw. 13 auf einfachste Weise unabhängig voneinander verstellen. Durch diese Verstellmöglichkeit der Lage der jeweiligen Dosieröffnung 12 bzw. 13 gegenüber den Schleuderscheiben 18 ist es auf einfachste Weise möglich, das Streubild der von den Schleuderscheiben 18 abgeschleuderten Düngemittelpartikel z.B. nur in seinem Innenbereich zu regulieren, ohne den äußeren Bereich zu verändern. Hierdurch entsteht eine wesentlich höhere Einstellgenauigkeit. Die Dosiermengen der beiden Dosieröffnungen 12 bzw. 13 sind unabhängig voneinander einstellbar bzw. ihre Öffnungsquerschnitte sind unabhängig voneinander zu verschließen bzw. zu öffnen. Bei einem Schleuderdüngerstreuer mit zwei Schleuderscheiben 18 lassen sich somit nur durch das Öffnen bzw. Verschließen der Dosieröffnungen 12 bzw. 13 mittels der Schieber 14 bzw. 15 vier Dosiermengen einstellen. Hierdurch ist es möglich, z.B. durch Abschalten einer der vier Öffnungen, beispielsweise der für den linken Außenbereich zuständigen Auslauföffnung die Arbeitsbreite links um etwa ein Viertel der Arbeitsbreite des Schleuderdüngerstreuers zu reduzieren. Bislang war es nur möglich, die Gesamtarbeitsbreite durch halbseitiges Streuen um die Hälfte zu reduzieren.

Durch die Möglichkeit der Ver- und Einstellung der Lage und Zuordnung der beiden, der Schleuderscheibe 18 zugeordneten Aufgabepunkte zueinander ist es auf einfachste Weise möglich, durch das Verschieben der Aufgabepunkte auf der Schleuderscheibe 18 das Streubild zu korrigieren. Die unabhängige Verstellung der Lage der beiden Dosieröffnungen 12 bzw. 13 gegeneinander und gegenüber der Schleuderscheibe 18 ermöglicht so beispielsweise, wenn zu viel Dünger in den Außen- oder Innenbereich der von den beiden Schleuderscheiben 18 erzeugten Streusektoren geworfen wird, die Lage des Aufgabepunktes, mit dem der Dünger auf der Schleuderscheibe 18 auftrifft, entsprechend durch die Verlagerung der Lage der jeweiligen Dosieröffnung 12 bzw. 13 auf der Schleuderscheibe 18 zu verlagern. Diese entsprechende Verlagerung des Düngemittelaufgabepunktes auf den Schleuderscheiben 18 bewirkt, daß die von den Wurfschaufeln 19 der Schleuderscheiben 18 abgeschleuderten Düngemittelpartikel wieder gleichmäßig über die zu bestreuende Fläche verteilt werden, so daß ein korrektes, gleichmäßiges Streubild entsteht. Es ergeben sich also eine Reihe von Variationsmöglichkeiten, um das Streubild zu korrigieren und zu optimieren, so daß eine gleichmäßige Düngerverteilung in der gewünschten Weise über die gewünschte Arbeitsbreite des Schleuderdüngerstreuers möglich wird. Beispielsweise läßt sich so sehr einfach durch die Reduzierung oder die Erhöhung der von den Dosieröffnungen 12 bzw. 13 ausgebrachten Düngermenge eine Streubildkorrektur durchführen. Es wird beispielsweise dem Aufgabepunkt, der für die Düngeranhäufung oder Düngerminderstelle verantwortlich ist, mehr oder weniger Dünger zugeführt, indem die Öffnungsweite der jeweiligen Dosieröffnung 12 bzw. 13 mittels der Schieber 14 bzw. 15 in entsprechender Weise geändert wird. Eine weitere Korrektur und Verlagerung von Düngeranhäufung bzw. Düngermangel ist durch eine entsprechende Lageänderung der Dosieröffnungen 12 bzw. 13 gegenüber den Schleuderscheiben 18 auf einfachste Weise möglich.

Zum Ausbringen von kleinen und kleinesten Düngerausbringmengen pro Flächeneinheit ist zur Vermeidung von Verstopfungen vorgesehen, daß nur eine Dosieröffnung 12 oder 13 pro Schleuderscheibe 18 geöffnet wird, so daß über eine größere Einstellung der anderen, noch zur Dosierung benutzten Dosieröffnung 12 oder 13 dann der Dünger der Schleuderscheibe 18 zugeführt wird. Hier ist es dann evtl notwendig, eine Streubildkorrektur zum Erzeugen eines symmetrischen Streubildes vorzunehmen, indem die Lage der noch zur Dosierung benutzten Dosieröffnung 12 oder 13 gegenüber der Schleuderscheibe 18, d.h. der Düngeraufgabepunkt auf die jeweilige Schleuderscheibe 18 verändert wird, so daß ein gleichmäßiges Streubild über die gesamte Streubreite erhalten wird.

Des weiteren kann erfindungsgemäß vorgesehen sein, daß dem Schleuderdüngerstreuer Sensoren zur Erfassung der einzelnen, von den Schleuderscheiben 18 erzeugten Streusektoren vorgesehen sind, deren aufgenommenen Meßwerte beispielsweise an eine elektronische Regeleinrichtung weitergeleitet werden. Diese elektronische Regeleinrichtung kann wiederum mit den Betätigungselementen 20 und 21 für die Schieber 14 und 15 gekoppelt sein. Weiterhin ist es denkbar, Betätigungsvorrichtungen zur Verstellung der Lage der Dosieröffnungen 12 und 13 gegenüber den Schleuderscheiben 18 zwischen dem Rahmen 1 des Schleuderdüngerstreuers und dem plattenförmigen Elementen 9 bzw. 10 vorzusehen, wobei die Betätigungsvorrichtungen zur Veränderung der Lage der Dosieröffnungen 12 und 13 gegenüber den Schleuderscheiben 18, also zur Verstellung der Düngeraufgabepunkte des aus dem Vorratsbehälter 2 durch die Dosieröffnungen 12 und 13 herausrieselnden Düngers, ebenfalls mit der elektronischen Regeleinrichtung, die beispielsweise auf dem Ackerschlepper angeordnet ist, verbunden. Durch die Koppelung der Betätigungselemente 20 und 21 für die Schieber 14 und 15 und der Betätigungsvorrichtung zur Verstellung der Lage der Dosieröffnungen 12 und 13 gegenüber den Schleuderscheiben 18 mit der elektronischen Regeleinrichtung ist es auf einfachste Weise möglich, eine automatische Veränderung der Öffnungsweite und der Lage der einer Schleuderscheibe 18 zugeordneten Auslauföffnungen Zueinander zu verändern, entsprechend der von den Sensoren ermittelten Werte, so daß eine automatische Streubildkorrektur erfolgt. Somit werden während des Düngerstreuens automatisch Korrektruen möglich. Auch ist eine individuelle Verstellung per Hand vom Schleppersitz aus möglich.

Damit die sich im Vorratsbehälter 2 befindlichen Düngemittelpartikel ordnungsgemäß zu den jeweiligen Dosieröffnungen 12 bzw. 13 gelangen, ragt in jedes trichterförmige Behälterteil 4 das angetriebene Rührorgan 32 hinein.

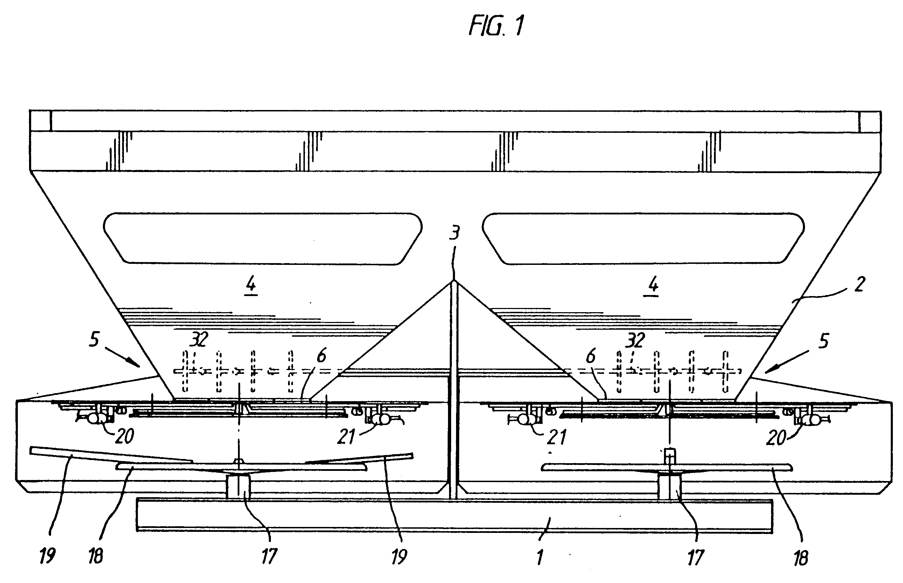

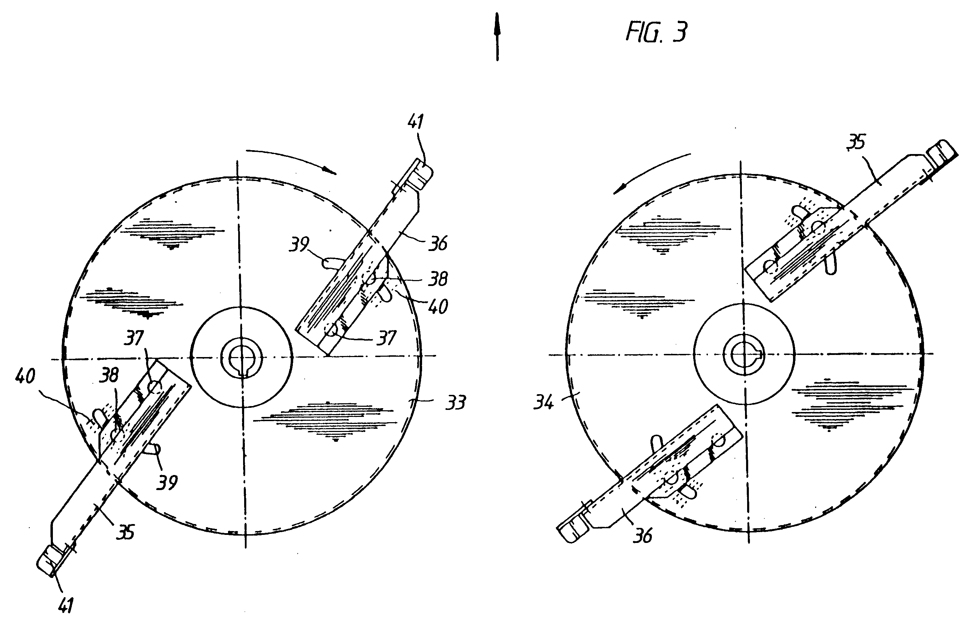

Die Fig. 3 zeigt ein Schleuderscheibenpaar mit den Schleuderscheiben 33 und 34, welche sich beispielsweise auf den Ausgangswellen der Getriebe 17 des Schleuderdüngerstreuers gemäß Fig. 1 werkzeuglos montieren lassen. Um eine noch bessere Anpassung an die jeweils auszustreuende Düngersorte bzw. die Arbeitsbreite, über welche die Düngemittel abgeschleudert werden soll, zu erreichen, weisen diese beiden Schleuderscheiben 33 und 34 die unterschiedlich lang ausgebildeten Wurfschaufeln 35 und 36 auf. Diese Wurfschaufeln 35 und 36 sind winkelverschwenkbar um den jeweiligen Bolzen 37 auf der Schleuderscheibe 33 bzw. 34 befestigt. Zur Einstellung der unterschiedlichen Stellungen der Wurfschaufeln 35 und 36 dient das jeweilige Festsetzelement 38, welches sich in dem Bereich des Langloches 39 verschwenken läßt. Die jeweilige Stellung der Wurfschaufel 35 bzw. 36 ist einer Streutabelle zu entnehmen, wobei die einzelnen Einstellpositionen exakt mittels der auf den Schleuderscheiben 33 bzw. 34 im Bereich des Langloches 39 angeordneten Einstellskala 40 einzustellen sind. Die Vorteile dieser Verstellung der Wurfschaufeln zur Streubildkorrektur sind beispielsweise in der EP-OS 02 92 873 beschrieben.

Damit sich die vorab geschilderten Vorteile hinsichtlich einer optimalen Streubildeinstellung auch auf die sog. Spätdüngung von bereits aufgewachsenen Pflanzen übertragen läßt, sind an den Wurfschaufeln 35 bzw. 36 die Schwenkschaufeln 41 in aufrechter Ebene schwenkbar angelenkt, so daß die von den Wurfschaufeln 35 bzw. 36 abgeschleuderten Düngemittelpartikel in Richtung nach oben abgeschleudert werden und weich von oben in den aufwachsenen Pflanzenbestand hinein fallen.

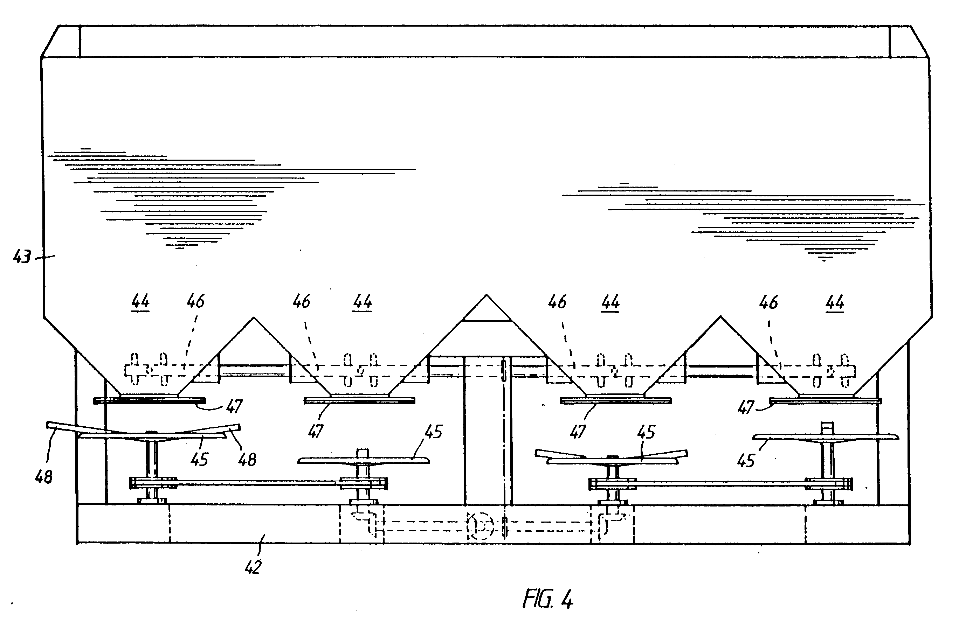

Die Fig. 4 zeigt einen Schleuderdüngerstreuer mit dem Rahmen 42 in dem der Vorratsbehälter 43 befestigt ist. Dieser Vorratsbehälter 43 weist die vier Trichterspitzen 44 auf, wobei jeder Trichterspitze 44 die Schleuderscheibe 45 zugeordnet ist. In jede Trichterspitze 44 ragt das angetriebene Rührorgan 46 hinein. Unterhalb der Trichterspitzen 44 ist jeweils das aus einer Dosieröffnung und einem diese Dosieröffnung in unterschiedlichen Öffnungsweiten einstell- und schließbaren Schieber bestehende Dosierorgan 47 angeordnet. Die aus dem Inneren des Vorratsbehälters 43 zu den Schleuderscheiben 45 in genau einstellbaren Mengen ausströmenden Düngemittelpartikel werden von den auf den Schleuderscheiben 45 angeordneten Wurfschaufeln 48 gleichmäßig über die zu bestreuende Fläche verteilt, wobei die Wurfschaufeln 48 die Düngemittelpartikel in vier lückenlos seitlich aneinander anschließenden und sich überlappende Streusektoren über die zu bestreuende Bodenoberfläche in einem gleichmäßigen Streubild verteilen. Die Schleuderscheiben 45 zugeordneten Dosierorgane 47 sind unabhängig voneinander ein- und verstellbar. Zur exakten Einstellung des Streubildes sind die Wurfschaufeln 48 winkelverschwenkbar auf den Schleuderscheiben 45 angeordnet.

Zum Ausbringen von besonders kleinen Ausbringmengen wird die Düngemittelzufuhr zu den beiden mittleren Schleuderscheiben 45 unterbrochen, indem die entsprechende Dosieröffnung mittels des Schiebers verschlossen wird, so daß nur noch den äußeren Schleuderscheiben 45 Düngemittelpartikel zugeführt werden. Hierdurch ist es dann möglich, beim Ausbringen von besonders kleinen Ausbringmengen die Öffnungsweite der den äußeren Schleuderscheiben 45 zugehörigen Dosieröffnung zu vergrößern, da ja nur noch Düngemittelpartikel aus zwei Dosieröffnungen ausgebracht werden, so daß es nicht zu Verstopfungen der Dosieröffnungen kommt, wie es evtl. beim Ausbringen der Düngemittelpartikel mittels der vier Auslauföffnungen 45 geschehen könnte, da die Öffnungsquerschnitte bei vier Dosieröffnungen logischer Weise wesentlich kleiner sind, als wenn die Düngemittelpartikel nur über zwei Dosieröffnungen den jeweiligen äußeren Schleuderscheiben 45 zugeführt werden. Zur Korrektur des Streubildes läßt sich nun selbstverständlich die jeweilige Lage der Dosieröffnung gegenüber den beiden Schleuderscheiben 45 derart verändern, daß sich die beiden Streusektoren, über welche die Düngemittelpartikel von den äußeren Schleuderscheiben 45 abgeschleudert werden, in gewünschter Weise überlappen, so daß ein Streubild gleichmäßiger Streustärke über die gesamte zu bestreuende Fläche entsteht.

Selbstverständlich ist es auch möglich, unterhalb jeder der Trichterspitzen 44 jeweils das Dosierorgan des Schleuderdüngerstreuers gemäß Fig. 1 anzuordnen, wobei sich dann sämtliche Vorteile des Zweischeibendüngerstreuers auch auf den Vierscheibenschleuderstreuer gemäß Fig. 4 übertragen lassen.

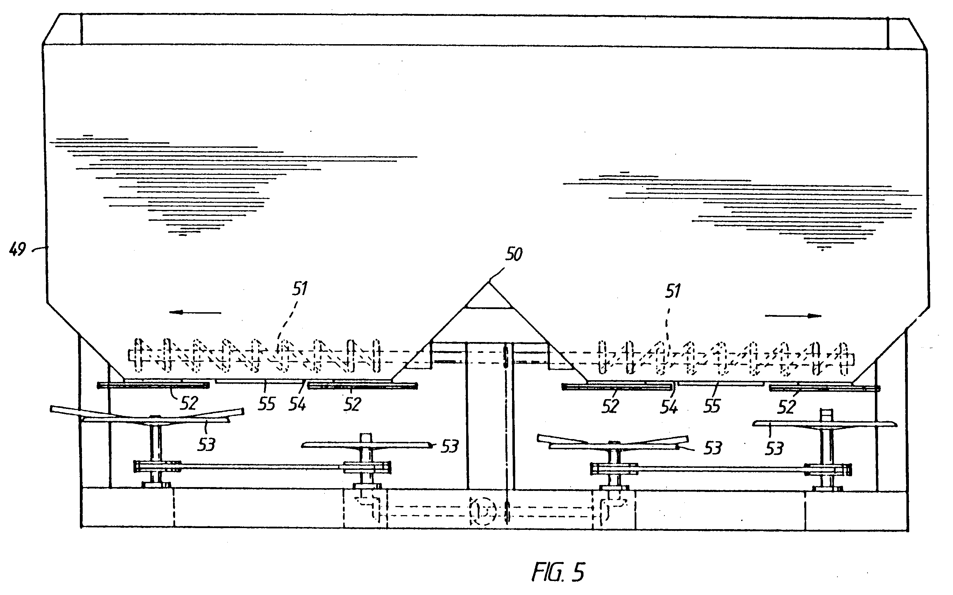

Die Fig. 5 zeigt einen Vierscheibenschleuderdüngerstreuer mit dem Vorratsbehälter 49, der in der Mitte mit dem Trenndach 50 ausgestattet ist. Innerhalb des Vorratsbehälter 49 ist die Rühr- und/oder Förderwelle 51 angeordnet, mit der der Dünger zu den Dosieröffnungen der aus den Dosieröffnungen und den Schiebern bestehenden Dosierorgane 52 gefördert wird. Die Dosierorgane 52 sind jeweils oberhalb der Schleuderscheiben 53 plaziert. In dem mittleren unteren Bereich 54 des Vorratsbehälters 49 sind jeweils zwei abdeckbare Entleerungsöffnungen 55 vorgesehen, so daß eine sehr schnelle Entleerung für im Vorratsbehälter 49 verbliebene Restmengen möglich ist.

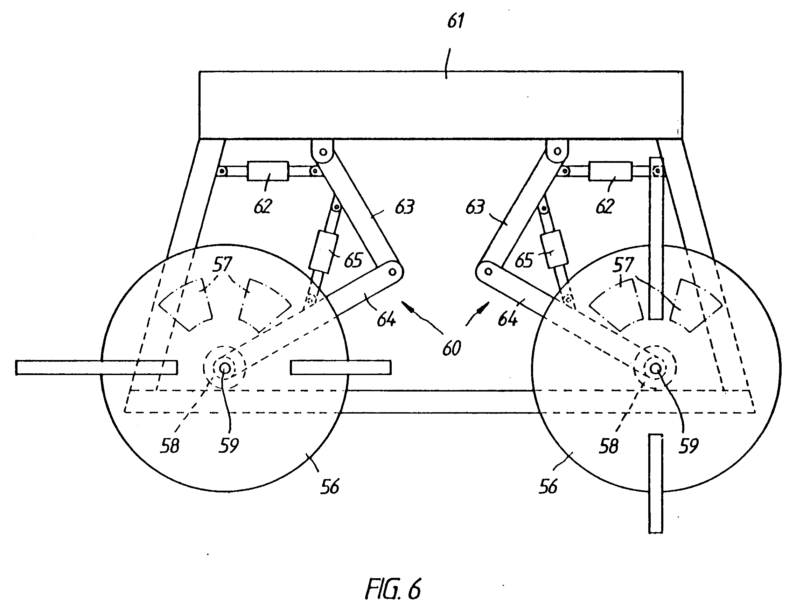

Eine weitere Möglichkeit zur Streubildkorrektur besteht darin, in dem die als Wurfelemente ausgebildeten Schleuderscheiben 56 gemäß Fig. 6 gegenüber den im Vorratsbehälterboden angeordneten Dosieröffnungen 57 verstellbar sind, so daß die Aufgabepunkte der Düngemittelpartikel auf der jeweiligen Schleuderscheibe 56 variierbar sind. Hierzu sind die Getriebe 58, auf deren Ausgangswelle 59 jeweils die Schleuderscheibe 56 befestigt ist, jeweils mittels eines verstellbaren Gelenkhebelgestänges 60 an dem Tragrahmen 61 des Schleuderdüngerstreuers in unterschiedlichen Positionen gegenüber den Dosieröffnungen 57 einstellbar, so daß sich der jeweilige Düngeraufgabepunkt der aus den Dosieröffnungen 57 herausrieselnden Düngemittelpartikel auf die jeweilige Schleuderscheibe 56 individuell einstellen läßt. Zur Einstellung des Düngeraufgabepunktes ist eine Verstelleinrichtung 62 zwischen dem Rahmen 61 des Schleuderdüngerstreuers und dem Verstellhebel 63 des Gelenkhebelgestänges 60 sowie mittels einer die Verstellhebel 63 und 64 miteinander verbindenden Verstelleinrichtung 65 erforderlich. Die Verstellung der Verstelleinrichtungen 62 und 65 kann sowohl manuell als auch automatisch erfolgen.

## Patentansprüche

1. Verfahren zum Ausbringen von Dünger mit einem Schleuderdüngerstreuer, der einen Rahmen (1) sowie einen mit mehreren einstellbaren und verschließbaren Dosieröffnungen (12,13,47,52,57) versehenen Vorratsbehälter (2,43,49) aufweist und bei dem sich zumindest eine angetriebene Schleuderscheibe (18,33,34,45,53,56) unterhalb des Vorratsbehälters (2,43,49) und der Dosieröffnungen (12,13,47,52,57) befindet, dadurch gekennzeichnet, daß beim Ausbringen von kleinen Düngermengen pro Flächeneinheit eine oder mehrere von unabhängig voneinander zu öffnende und zu schließende Dosieröffnungen (12,13,47,52,57) geschlossen werden und wobei gleichzeitig die weiterhin zur Dosierung benutzten Dosieröffnungen (12,13,47,52,57) größer eingestellt werden, und daß Streubildkorrekturmaßnahmen, wie Verlagerung des Aufgabepunktes des Materials auf der Schleuderscheibe (18,33,34,45,53,56) oder Verschiebung der Schleuderscheibe (56) gegenüber den Dosieröffnungen (12,13,47,52,57) oder Verstellung der Wurfschaufeln (19,35,36) zur Erzielung eines gleichmäßigen Streubildes über die gesamte Streubreite durchgeführt werden.

2. Verfahren nach Anspruch 1, dadurch gekennzeichnet, daß beim Ausbringen von kleinen Düngermengen pro Flächeneinheit mit vier Schleuderscheiben die Dosieröffnungen (47,52) zu den beiden in der Mitte des Streuers angeordneten Wurfelementen (45,53) geschlossen werden, und der Dünger nur noch ausschließlich über die äußeren Dosieröffnungen (52) den beiden äußeren Schleuderscheiben (53) zugeführt wird.

## Claims

1. Method of distributing fertilizer with a centrifugal fertilizer broadcaster, which includes a frame (1) and a hopper (2, 43, 49) provided with a plurality of adjustable and closable metering apertures (12, 13, 47, 52, 57), and wherein at least one driven centrifugal disc (18, 33, 34, 45, 53, 56) is situated beneath the hopper (2, 43, 49) and the metering apertures (12, 13, 47, 52, 57), characterised in that, when small quantities of fertiliser are distributed per unit area, one or a plurality of metering apertures (12, 13, 47, 52, 57), which are to be opened and closed independently of one another, are closed, and wherein simultaneously the metering apertures (12, 13, 47, 52, 57), which are also used for the metering process, are set to be greater, and in that steps are taken for correcting the broadcasting pattern, such as the shifting of the delivery point for the material on the centrifugal disc (18, 33, 34, 45, 53, 56) or the displacement of the centrifugal disc (56) relative to the metering apertures (12, 13, 47, 52, 57) or the adjustment of the throwing vanes (19, 35, 36) in order to achieve a uniform broadcasting pattern over the entire broadcasting width.

2. Method according to claim 1, characterized in that, when small quantities of fertilizer are distributed per unit area by four centrifugal discs, the metering apertures (47, 52) for the two throwing elements (45, 53) disposed in the centre of the broadcaster are closed, and the fertilizer is only still exclusively supplied to the two outer centrifugal discs (53) via the outer metering apertures (52).

## Revendications

1. Procédé de distribution d'engrais à l'aide d'un épandeur centrifuge d'engrais comprenant un châssis (1) ainsi qu'un réservoir d'alimentation (2, 43, 49) comportant plusieurs orifices de dosage (12, 13, 47, 52, 57) susceptibles d'être réglés et fermés, et au moins un disque d'épandage entraîné (18, 33, 34, 45, 53, 56) situé sous le réservoir d'alimentation (2, 43, 49) et sous les orifices de dosage (12, 13, 47, 52, 57), procédé caractérisé en ce que pour la distribution de petites quantités d'engrais par unité de surface, on ferme un ou plusieurs orifices de dosage (12, 13, 47, 52, 57) qui s'ouvrent et se ferment indépendamment l'un de l'autre, et en même temps on règle à une plus grande ouverture les autres orifices de dosage (12, 13, 47, 52, 57) utilisés pour le dosage, et en ce qu'on met en oeuvre des moyens de correction de l'image d'épandage et on déplace le point d'arrivée du produit sur le disque d'épandage (18, 33, 34, 45, 53, 56) ou on décale le disque d'épandage (56) par rapport aux orifices de dosage (12, 13, 47, 52, 57) ou on règle les palettes d'éjection (19, 35, 36) pour obtenir une image d'épandage régulière sur toute la largeur de travail.

2. Procédé selon la revendication 1, caractérisé en ce que pour la distribution de petites quantités d'engrais par unité de surface, avec quatre disques d'épandage, on ferme les orifices de dosage (47, 52) associés aux deux éléments d'éjection (45, 53) prévus au milieu de l'épandeur, et l'engrais n'arrive plus que par les orifices de dosage extérieurs (52) vers les deux disques d'épandage (53) extérieurs.
